(19)

Europäisches
Patentamt
European
Patent Office
Office européen
des brevets

(11)  **EP 1 834 853 A2**

(12)  **EUROPEAN PATENT APPLICATION**

(43) Date of publication:
   **19.09.2007 Bulletin 2007/38**

(51) Int Cl.:
   **B60T 13/66** (2006.01)

(21) Application number: **07104175.0**

(22) Date of filing: **14.03.2007**

(84) Designated Contracting States:
   **AT BE BG CH CY CZ DE DK EE ES FI FR GB GR
   HU IE IS IT LI LT LU LV MC MT NL PL PT RO SE
   SI SK TR**
   Designated Extension States:
   **AL BA HR MK YU**

(30) Priority: **15.03.2006 JP 2006071069**

(71) Applicant: **Toyota Jidosha Kabushihi Kaisha
   Aichi-ken
   Toyota-shi 471-8571 (JP)**

(72) Inventors:
   • **Miyazaki, Tetsuya
    TOYOTA-SHI, AICHI-KEN 471-8571 (JP)**
   • **Irie, Yoshiaki
    TOYOTA-SHI, AICHI-KEN 471-8571 (JP)**
   • **Suda, Rio
    TOYOTA-SHI, AICHI-KEN 471-8571 (JP)**

(74) Representative: **Intes, Didier Gérard André et al
   Cabinet Beau de Loménie,
   158, rue de l'Université
   75340 Paris Cedex 07 (FR)**

(54)  **Brake controller and method for controlling brakes**

(57)   A brake controller is provided, having a braking
force application mechanism (21FR, 21FL, 21RR, 21RL,
80) that presses a friction member against a braked member (22) so as to apply a braking force to a wheel of a
vehicle; and a control unit (200) that calculates an index
indicating a difference between an estimated braking effectiveness and an actual braking effectiveness, calculates a correction amount using the index, and corrects
a target value, which is set to control a pressing force of
the friction member, based on the correction amount to
reduce a variation in a braking effectiveness of the vehi-
cle. The control unit determines whether the index is in-
accurate, and limits changing the correction amount us-
ing the index if it is determined that the index is inaccurate.

FIG.4

**EP 1 834 853 A2**

# EP 1 834 853 A2

**Description**

BACKGROUND OF THE INVENTION

1. Field of the Invention

The present invention relates to a brake controller and method of controlling the braking force applied to the wheel of a vehicle.

2. Description of the Related Art

A conventional electronically controlled brake control system for a vehicle (for example, in Japanese Patent Application Publication No. 62-18359 (1987)) generates a deceleration error signal by comparing the driver braking request signal with the measured deceleration. This brake system further has a means for correcting the braking request signal that generates an adaptive coefficient from the deceleration error signal and corrects the braking request signal by using an adaptive coefficient under prescribed conditions, such as vehicle speed, brake level, and operating inclination, of over a plurality of stoppings of the vehicle. The brake system compensates for brake deterioration over an extended period of time and restores desired brake performance.

However, the measured deceleration error may vary in response to factors other than brake deterioration, such as the variations in the vehicle operating conditions, for example, the environmental temperature, external disturbances and the occurrence of abnormalities. Because of this, the adaptive coefficients obtained from the deceleration level error signal may be difficult to appropriately characterize as reflecting (resulting from) only the deterioration of the brake over an extended period of time. In such a case, the use of an adaptive coefficient does not necessarily compensate for long-term brake deterioration and stabilization of the braking effectiveness.

SUMMARY OF THE INVENTION

Given the foregoing, the present invention provides a brake controller and a method of stabilizing braking effectiveness.

One aspect of the present invention provides a brake controller that includes a braking force application mechanism that presses a friction member against a braked member to apply braking force to the wheel of a vehicle. The brake controller also includes a control unit that calculates an index that indicates the difference between the estimated braking effectiveness and the actual braking effectiveness, calculates a correction amount using the index, determines whether the index is inaccurate, limits changes in the correction amount calculated using the index if it is determined that the index is inaccurate, and corrects the target value, which is set to control the pressing force of the friction member, based on the correction amount to reduce variation in the braking effectiveness of the vehicle.

According to this aspect, the target value that may be corrected by the control unit includes, for example, the target deceleration, the target pressure or the like. The control unit calculates the correction amount using the index and corrects the target value based on the correction amount to reduce the variation in the braking effectiveness of the vehicle. By doing this, it is possible to stabilize the braking effectiveness and suppress a feeling of unnaturalness imparted to the driver when braking. The magnitude of or time variations in deceleration or braking force, for example, may be used as a quantity indicating the braking effectiveness.

When it is determined that the index is inaccurate, the control unit limits the change in the correction amount that is calculated using the index. Thus, when the index has poor accuracy due to, for example, an external disturbance, the inaccuracy in the index will be limitedly reflected in the calculation of the correction amount. By doing this, it is possible to improve stability in the braking effectiveness.

If the index is inaccurate, the control unit may limit changing of the correction amount using the index by holding the correction amount constant (unchanged) until it is determined that the index is accurate. By prohibiting the change in the correction amount when it is determined that the index is inaccurate and holding the correction amount constant (unchanged) until the accuracy of the index is improved, inaccuracies in the index are not brought into the calculation of the correction amount. When it is determined that the index is inaccurate as described above, it is also possible to stop the correction of the target value. However, if correction of the target value is stopped when the correction amount is relatively large, for example, the feeling of unnaturalness imparted to the driver could increase. Therefore, by limiting the changing of the correction amount by holding the correction amount constant (unchanged), because the same correction amount continues to be used in correcting the target value until the index accuracy has improved, the feeling of unnaturalness imparted to the driver is reduced.

The braking force application mechanism may be a hydraulic braking force application mechanism that presses the friction member against the braked member by supplying an operating fluid, and the control unit may extract an actual hydraulic pressure deceleration caused by the hydraulic braking force application mechanism from a measured deceleration of the vehicle, and calculate the correction amount using the difference between the estimated hydraulic pressure deceleration estimated by using a hydraulic pressure of the operating fluid supplied by the hydraulic braking force application mechanism and the actual hydraulic pressure deceleration.

That is, the control unit uses the estimated hydraulic pressure deceleration as the estimated braking effectiveness, and uses the difference between the estimated hydraulic pressure deceleration and the actual hydraulic pressure deceleration as the index indicating the difference between the estimated braking effectiveness and the actual braking effectiveness. By eliminating deceleration by factors other than hydraulic pressure braking from the measured deceleration of the vehicle, and using the difference between the deceleration caused by hydraulic pressure braking and the estimated deceleration presumed to be caused by hydraulic pressure braking in this manner, it is possible to evaluate the variations in braking effectiveness with improved accuracy.

The control unit may limit the change of the correction amount when acceleration or deceleration by a mechanism other than the hydraulic braking force application mechanism is acting or take place on the vehicle. In other words, the index may be determined as being inaccurate when acceleration or deceleration by a mechanism other than the hydraulic braking force application mechanism is acting on the vehicle. If a factor other than the braking force generated by hydraulic pressure accelerates or decelerates the vehicle, the deceleration of the vehicle may be affected (varied). For example, when the transmission of the vehicle changes gears, a shift shock can occur that causes temporary variation in the deceleration of the vehicle that is unrelated to the braking force applied to the vehicle. If it is not possible to accurately eliminate the acceleration or deceleration caused by factors other than the braking force generated by hydraulic pressure from the measured value of deceleration, even if the actual hydraulic pressure deceleration does not vary, there is a possibility that it will be determined as if it were varying. Therefore, by limiting the change of the correction amount when acceleration or deceleration is acting on the vehicle by a mechanism other than the braking force application mechanism, it is possible to prevent variation in the deceleration of the vehicle unrelated to the braking force generated by hydraulic pressure from influencing the calculation of the correction amount.

The control unit may limit the change of the correction amount when the vehicle is moving in reverse. That is, the index may be determined as being inaccurate when the vehicle is moving in reverse. The friction coefficient of the friction member when the vehicle is moving forward is generally different from when the vehicle is moving in reverse. The braking effectiveness when the vehicle is moving forward, therefore, will be different from when the vehicle is moving in reverse, even for the same pressing force by the friction member. For this reason, the correction amount calculated using the value measured when the vehicle is moving in reverse does not usually reflect the braking effectiveness during forward movement of the vehicle. The change of the correction amount is limited, therefore, when the vehicle is moving in reverse.

The control unit may also limit the change of the correction amount when the vehicle runs on an irregular road surface. In other words, the control unit may determine that the index is inaccurate, when the vehicle runs on an irregular road surface. When the vehicle moves on an irregular road surface, there may be sudden and large variations in the force received by the vehicle from the road surface. These variations act as noise in the measured value necessary for obtaining the above-described index. For this reason, when the vehicle is moving over an irregular road surface, the accuracy of the index is expected to decrease. The change of the correction amount is limited, therefore, when the vehicle is moving over an irregular road surface.

The control unit may limit the change of the correction amount when the vehicle is turning. That is, the control unit may determine that the index is inaccurate when the vehicle is turning. When the vehicle turns, cornering drag occurs, which increases the rolling resistance acting on the wheel in comparison with straight-line movement. The cornering drag changes or varies the deceleration of the vehicle, and reduces the accuracy of the index. The change of the correction amount is limited, therefore, while the vehicle is turning.

The control unit may limit the change of the correction amount during execution of vehicle behavior stabilization control. That is, the control unit may determine that the index is inaccurate during execution of vehicle behavior stabilization control. Vehicle behavior stabilization control is sometimes executed when, for example, the wheels slip with relation to the road surface. If this occurs, the slippage or the like of the wheels changes or varies the deceleration of the vehicle in a manner different from that in the usual case, and there may be a decrease in the accuracy of the index. The change of the correction amount is limited, therefore, during the execution of vehicle behavior stabilization control.

The control unit may limit the change of the correction amount when a vehicle abnormality is detected. In other words, the control unit may determine that the index is inaccurate when the vehicle abnormality is detected. If an abnormality is detected, for example, in the case in which a wheel abnormality is detected, in the case in which the temperature of the friction member exceeds a prescribed value, or in the case in which an abnormality is detected in a sensor that measures values necessary for the calculation of the above-described index, it is expected that the accuracy of the index decreases. The change of the correction amount is limited, therefore, so as to restrict the reflection of a reduced-accuracy index in the calculation of the correction amount.

The control unit may limit the change of the correction amount when the accuracy of the estimated braking effectiveness decreases. In other words, the index may be determined as being inaccurate when the accuracy of the estimated braking effectives decreases. When the actual environmental conditions vary greatly from environmental conditions, such as the temperature and the like, preset in the control unit for the purpose of estimating the braking effectiveness, the accuracy of the estimated braking effectiveness decreases. For example, in a hydraulic braking force application mechanism, if the ambient temperature around the vehicle falls below a prescribed value, the viscosity of the operating fluid may increase, which may also cause the measured value of operating hydraulic pressure to differ from the value of the hydraulic pressure actually acting on the friction member, depending upon the position of measuring the operating hydraulic pressure, thereby decreasing the accuracy of the estimated braking effectiveness. By limiting the change of the correction amount in such cases, therefore, the reduced accuracy of the index is not brought into the calculation of the correction amount.

Another aspect of the present invention provides a method of controlling the braking force applied to a wheel of a vehicle by pressing a friction member against a braked member. This method of brake control includes calculating an index indicating the difference between the estimated braking effectiveness and the actual braking effectiveness; updating a correction amount based on the calculated index; determining whether the index is inaccurate; prohibiting the updating of the correction amount if the index is determined as being inaccurate; and correcting the target value, which is set for the purpose of controlling the pressing force of the friction member, by using the correction amount to reduce the variation in braking effectiveness of the vehicle.

BRIEF DESCRIPTIONS OF THE DRAWINGS

The foregoing and further objects, features, and advantages of the invention will become apparent from the following description of preferred embodiments with reference to the accompanying drawings, wherein like numerals are used to represent like elements and wherein:

FIG. 1 shows a schematic view of a brake controller according to an embodiment of the present invention;
FIG. 2 shows a control block diagram according to the embodiment of FIG. 1;
FIG. 3 shows a flowchart indicating an example of control process for the braking force in the embodiment of FIG. 1;
FIG. 4 shows a flowchart indicating an example of learning process for the braking effectiveness in the embodiment of FIG. 1; and
FIG. 5 shows a flowchart indicating an example of the process for determining whether a learning prohibition condition has been satisfied in the embodiment of FIG. 1.

DETAILED DESCRIPTION OF THE PREFERRED EMBODIMENTS

An embodiment of the present invention is described in detail below, with references made to the drawings.

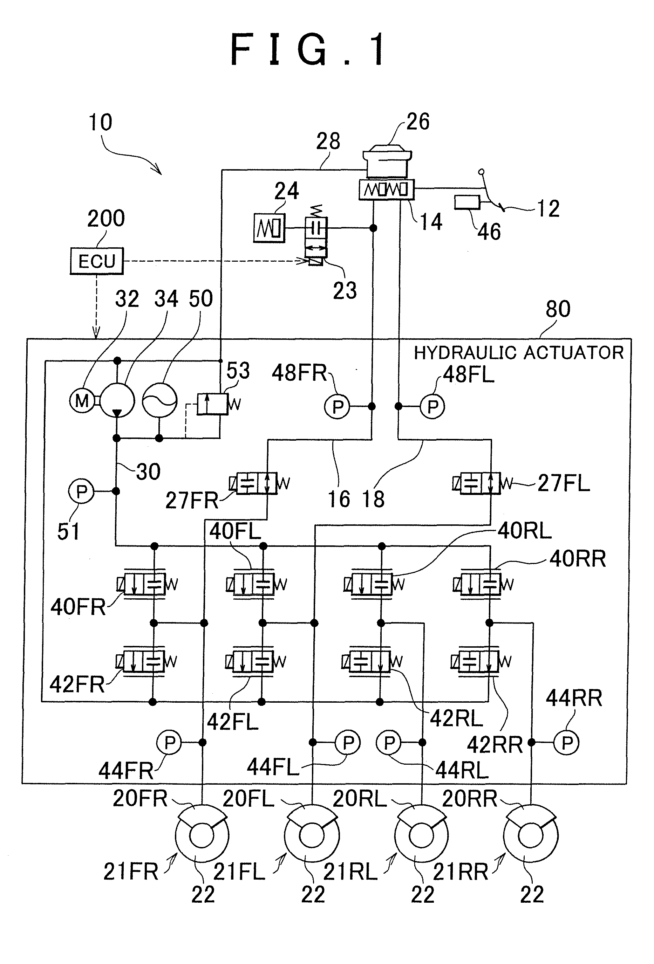

FIG. 1 is a schematic view of a brake controller 10 according to an embodiment of the present invention. The brake controller 10 shown in FIG. 1 is an electronically controlled brake system for a vehicle, in which the brakes of the four wheels of the vehicle are independently and optimally set in response to the operation of a brake operating member, such as a brake pedal 12. The vehicle into which the brake controller 10 of this embodiment is installed has a steering device (not illustrated) that steers the steered wheels of the four wheels, and a drive source (not illustrated) such as an internal combustion engine or motor or the like that drives the driving wheels of the four wheels of the vehicle.
The disc brake units 21FR, 21FL, 21RR, 21RL, which are the braking force application mechanisms, apply braking force to the front-right wheel, the front-left wheel, the rear-right wheel, and the rear-left wheel, respectively, of the vehicle. Each of the disc brake units 21FR to 2 1 RL includes a brake disc 22 and one of the wheel cylinders 20FR to 20RL inside a brake caliper. The wheel cylinders 20FR to 20RL are each connected to a hydraulic actuator 80 via a different fluid passage, respectively. In the description that follows, as a convenience the wheel cylinders 20FR to 20RL will be collectively referred to as the "wheel cylinder 20."
In the disc brake units 21FR to 21RL, when brake fluid is supplied to the wheel cylinder 20 from the hydraulic actuator 80, a friction member such as a disc pad is pressed against a braked member such as the brake disc 22, which rotates together with the wheel. When this occurs, braking force is applied to each of the wheels. Although this embodiment uses disc brake units 21FR to 21RL, a different braking force application mechanism, including a wheel cylinder of, for example, a drum brake, may be used. Alternatively, rather than controlling the pressing force of a friction member by a fluid force, a braking force application mechanism that controls the pressing force of a friction member against a wheel using an electrically driven mechanism, such as an electric motor, may be used.
The brake pedal 12 is connected to a master cylinder 14 that sends out brake fluid as an operating fluid in response to the depression of the brake by the driver. The brake pedal 12 is provided with a stroke sensor 46 for detecting the depression stroke thereof. One output port of the master cylinder 14 is connected to a stroke simulator 24 that generates a reaction force in response to the operating force of the brake pedal 12 by the driver. A simulator cutoff valve 23 is provided midway in the fluid passage between the master cylinder 14 and the stroke simulator 24. The simulator cutoff valve 23 is a normally closed electromagnetic valve, which is closed when not electrically powered, and opens when operation of the brake pedal 12 by the driver is detected. The master cylinder 14 is connected to a reservoir tank 26 for storing brake fluid.

Another output port of the master cylinder 14 is connected to a front-right wheel brake hydraulic control pipe 16. The brake hydraulic control pipe 16 is connected to the wheel cylinder 20FR for the front-right wheel for the application of braking force to the front-right wheel (not illustrated). Yet another output port of the master cylinder 14 is connected to a front-left wheel brake hydraulic control pipe 18. The brake hydraulic control pipe 18 is connected to the wheel cylinder 20FL for the front-left wheel for the application of braking force to the front-left wheel (not illustrated). A right master cutoff value 27FR is provided midway in the front-right wheel brake hydraulic control pipe 16 and a left master cutoff valve 27FL is provided midway in the front-left wheel brake hydraulic control pipe 18. The right master cutoff valve 27FR and the left master cutoff valve 27FL are normally opened electromagnetic valves, which are opened when not electrically powered and switch to the closed condition when operation of the brake pedal 12 by the driver is detected.

A right master pressure sensor 48FR is provided midway in the right-front wheel brake hydraulic control pipe 16 to detect the master cylinder pressure for the front-right wheel, and a left master pressure sensor 48FL is provided midway in the front-left wheel brake hydraulic control pipe 18 to detect the master cylinder pressure for the front-left wheel. Although in the brake controller 10, when the brake pedal 12 is depressed by the driver, the amount of depression operation is detected by the stroke sensor 46, it is also possible to determine the force of depression operation of the brake pedal 12 (depressing force) from the master cylinder pressure detected by the right master pressure sensor 48FR and the left master pressure sensor 48FL. Monitoring the master cylinder pressure using the two pressure sensors 48FR and 48FL in the event of a failure of the stroke sensor 46 is preferable from the standpoint of failsafe operation. Also, in the following description, the right master pressure sensor 48FR and the left master pressure sensor 48FL are sometimes referred to collectively as the "master cylinder pressure sensors 48."

One end of a hydraulic feed/drain pipe 28 is connected to the reservoir tank 26, and the other end of this hydraulic feed/drain pipe 28 is connected to the intake port of an oil pump 34 that is driven by a motor 32. The drain port of the oil pump 34 is connected to a high-pressure pipe 30, and the high-pressure pipe 30 is connected to an accumulator 50 and a relief valve 53. In this embodiment, the oil pump 34 is a reciprocating pump having two or more pistons (not illustrated) that are respectively moved reciprocally by the motor 32. The accumulator 50 stores the pressure energy of the brake fluid by converting it to pressure energy of a filling gas of nitrogen or the like.

The accumulator 50 stores brake fluid with the pressure elevated to, for example, approximately 14 to 22 MPa by the oil pump 34. The valve output of the relief valve 53 is connected to the hydraulic feed/drain pipe 28, and when the pressure of the brake fluid in the accumulator 50 rises abnormally to, for example, approximately 25 MPa, the relief valve 53 opens, and the high-pressure brake fluid is returned to the hydraulic feed/drain pipe 28. Also, the high-pressure pipe 30 is provided with an accumulator pressure sensor 51 that detects the output pressure from the accumulator 50, which is the pressure of the brake fluid in the accumulator 50.

The high-pressure pipe 30, via the pressure booster valves 40FR, 40FL, 40RR, 40RL, is connected to the front-right wheel cylinder 20FR, the front-left wheel cylinder 20FL, the rear-right wheel cylinder 20RR, and the rear-left wheel cylinder 20RL. In the following description, the pressure booster valves 40FR to 40RL are sometimes collectively referred to as the pressure booster valves 40. Each of the pressure booster valves 40 is a normally closed electromagnetic flow control valve (linear valve), which is closed when not electrically powered, and is used to boost the pressure of the wheel cylinder 20 as needed.

The front-right wheel cylinder 20FR and the front-left wheel cylinder 20FL are connected to the hydraulic feed/drain pipe 28 via the pressure-reduction valves 42FR and 42FL, respectively. The pressure reduction valves 42FR and 42FL are normally closed electromagnetic flow control valves (linear valves) used to reduce the pressure in the wheel cylinders 20FR and 20FL as necessary. The rear-right wheel cylinder 20RR and the rear-left wheel cylinder 20RL are connected to the hydraulic feed/drain pipe 28 via the pressure reduction valves 42RR and 42RL, respectively, which are normally open electromagnetic flow control valves. In the following description, the pressure reduction valves 42FR to 42RL are sometimes referred to collectively as the "pressure reduction valves 42."

Wheel cylinder pressure sensors 44FR, 44FL, 44RR, 44RL detect the wheel cylinder pressure that is the pressure of the brake fluid acting on the respective wheel cylinders 20, and are provided in the vicinity of the front-right, front-left, rear-right, and rear-left wheel cylinders 20FR to 20RL. In the description that follows, the wheel cylinder pressure sensors 44FR to 44RL are sometimes referred to collectively as the "wheel cylinder pressure sensors 44."

The above-described right master cutoff valve 27FR and left master cutoff valve 27FL, the pressure booster valves 40FR to 40RL, the pressure reduction valves 42FR to 42RL, the oil pump 34, and the accumulator 50 and the like constitute a hydraulic actuator 80 of the brake controller 10. The hydraulic actuator 80 is controlled by the electronic control unit (hereinafter "ECU") 200, which is the control unit of this embodiment. The ECU 200 includes a CPU that executes various calculation processes, a ROM into which various control programs are stored, a RAM used for data storage and used as a working area for program execution, an input/output interface, and a memory or the like.

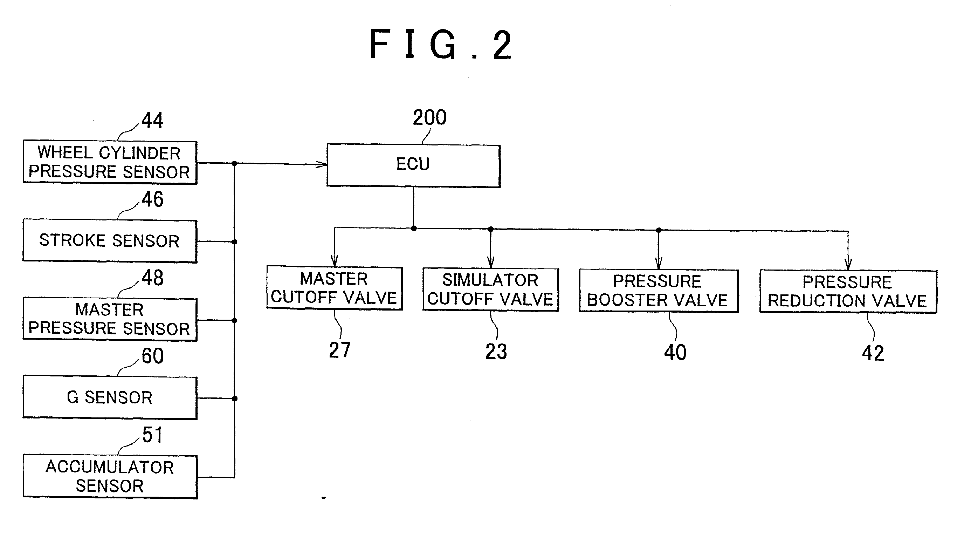

FIG. 2 is a control block diagram according to this embodiment. The above-described master cutoff valves 27FR, 27FL, the simulator cutoff valve 23, the pressure booster valves 40FR to 40RL, and the pressure reduction valves 42FR to 42RL and the like are electrically connected to the ECU 200. The ECU 200 receives signals from the wheel cylinder pressure sensor 44FR to 44RL indicating the wheel cylinder pressures of the wheel cylinders 20FR to 20RL. Additionally, the ECU 200 receives a signal from the stroke sensor 46 indicating the pedal stroke of the brake pedal 12, and also receives signals from the right master pressure sensor 48FR and the left master pressure sensor 48FL indicating the master cylinder pressures. The ECU 200 also receives a signal from the accumulator pressure sensor 51 indicating the accumulator pressure. A G sensor (An accelerometer) 60 is electrically connected to the ECU 200 and supplies to the ECU 200 a signal indicating the acceleration or deceleration of the vehicle.

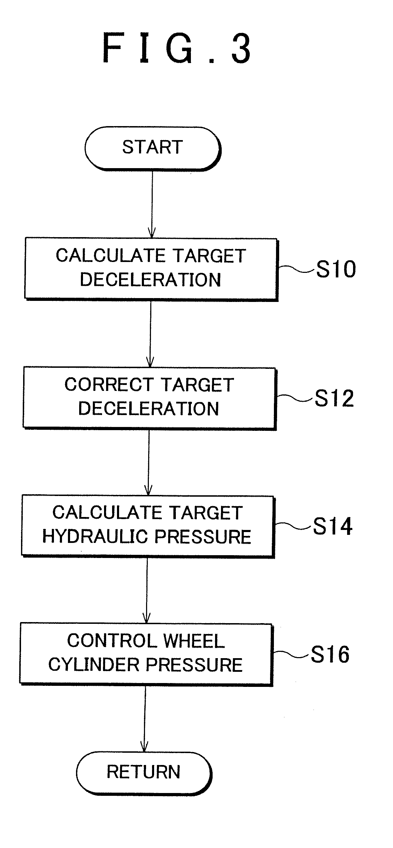

In the brake controller 10 configured in this manner, the ECU 200 controls the wheel cylinder pressure and the braking force that is applied to the wheels. FIG. 3 is a flowchart showing an example of braking force control process in this embodiment. The process shown in FIG. 3 is executed at prescribed intervals after the generation of a braking request signal, such as the depression of the brake pedal 12 by the driver, this being, for example, every 3 to 6 ms.

As shown in FIG. 3, upon receiving the braking request signal, the ECU 200 first calculates a target deceleration based on the depression stroke of the brake pedal 12 and the master cylinder pressure (S10). The ECU 200 then corrects the target deceleration, based on the learned (previously calculated and stored) braking effectiveness, so that the variation in the braking effectiveness is reduced (S12). Specifically, the ECU 200 performs the correction by multiplying the target deceleration by a braking effectiveness correction coefficient. The braking effectiveness coefficient is separately calculated by the ECU 200, based on the difference between the actual braking effectiveness and the estimated braking effectiveness, and stored. The correction reduces the variation in the braking effectiveness of the vehicle, and suppresses the feeling of unnaturalness imparted to the driver when braking.

The ECU 200 may further perform correction by multiplying the target deceleration by a temperature correction coefficient. The temperature correction coefficient may be determined using preset map or the like, in accordance with the brake pad temperature. The brake pad temperature may be measured directly using a temperature sensor, and may alternatively be estimated based on the wheel cylinder pressure or the like. If this is done, it is possible to suppress the variation in the braking effectiveness caused by the variation in the temperature of the brake pad. The ECU 200 may further perform correction by multiplying the target deceleration by a vehicle weight correction coefficient. In the same manner as for the temperature correction coefficient, the vehicle weight correction coefficient may be determined from a preset map or the like, in accordance with the vehicle weight. Alternatively, the vehicle weight may be estimated from, for example, the variation in acceleration of the vehicle. If this is done, it is possible to suppress the variation in the braking effectiveness caused by the change in the vehicle weight.

Next, the ECU 200 calculates the target hydraulic pressure of each wheel cylinder 20 based on the corrected target deceleration (S 14). The ECU 200 then controls the pressure booster valves 40 and the pressure reduction valves 42 so that the pressure of each wheel cylinder tracks to the target hydraulic pressure (S16). As a result, the desired braking force is applied to each wheel by pressing brake pads against the brake discs 22.

At this time, the master cutoff valves 27FR and 27FL are closed, and the simulator cutoff valve 23 is open. Therefore, the brake fluid that is sent from the master cylinder 14 by depression of the brake pedal 12 by the driver passes through the simulator cutoff valve 23 and flows into the stroke simulator 24.

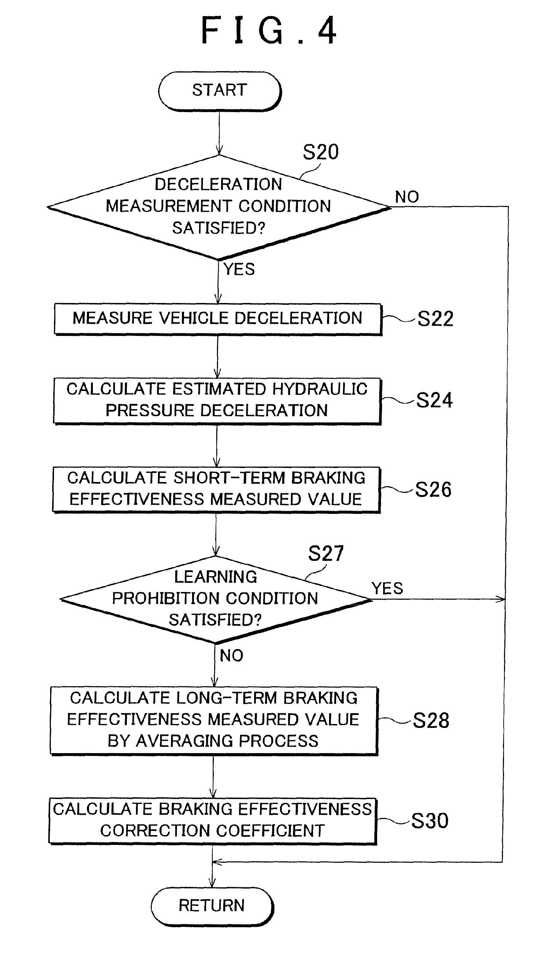

FIG. 4 is a flowchart showing an example of the learning process of the braking effectiveness in this embodiment. The ECU 200 learns the variation in the braking effectiveness and successively updates the braking effectiveness correction coefficient. The process shown in FIG. 4 is executed with an appropriate frequency, from the time of the startup to the time of stopping of the drive source of the vehicle. When the learning process shown in FIG. 4 begins, the ECU 200 first determines whether the running condition of the vehicle satisfies a deceleration measurement condition (S20). The deceleration measurement condition is satisfied when, for example, the speed of the vehicle approaches a prescribed speed, this being stored in the ECU 200 beforehand. The prescribed speed of the vehicle may be set in the range, for example, of 10 to 60 km/h. In particular, if the vehicle speed is sufficiently low, because the friction coefficient of the brake pads increases toward the static friction coefficient, the deceleration rapidly increases. Accordingly, it is desirable to avoid measurement of the deceleration of the vehicle.

If the deceleration measurement condition is not satisfied (No at S20), the ECU 200 ends the learning process without updating the braking effectiveness correction coefficient, and restarts the process at the time of the next execution. If, however, the deceleration measurement condition is satisfied, (Yes at S20), the ECU 200 measures the deceleration of the vehicle. The deceleration of the vehicle is measured by the G sensor (accelerometer) 60. In this embodiment, the ECU 200 acquires the deceleration of the vehicle by averaging the values measured by the G sensor 60 over a prescribed period of time, for example, over a period of 0.2 s (S22). The ECU 200 also calculates the estimated hydraulic pressure deceleration (S24). The estimated hydraulic pressure deceleration is calculated using the measured value of the wheel cylinder pressure sensors 44, and is the estimated value of the deceleration applied to the vehicle by the disc brake units 21. In this embodiment, the estimated hydraulic pressure deceleration is used as the estimated braking effectiveness by the disc brake units 21.

The ECU 200 calculates the measured value of short-term braking effectiveness based on the measured vehicle deceleration and the estimated hydraulic pressure deceleration (S26). In calculating the measured value of the short-term braking effectiveness, the ECU 200 first extracts the deceleration by the hydraulic pressure braking force from the measured vehicle deceleration. The extracted deceleration will be referred to as the "actual hydraulic pressure deceleration." The actual hydraulic pressure deceleration is the deceleration imparted to the vehicle by the braking force generated by the supply of brake fluid to the disc brake unit 21.

The ECU 200 subtracts the deceleration caused by factors other than hydraulic pressure braking force from the measured value of vehicle deceleration to extract the actual hydraulic pressure deceleration. Deceleration by factors other than the hydraulic pressure braking force includes, for example, the deceleration caused by engine braking, the rolling resistance of the wheel and an inclination in the running road surface. The parking brake deceleration occurring when the parking brake is operated is another such factor not related to the hydraulic pressure braking force. In the case of a hybrid vehicle, deceleration by regenerative braking is another such other factor. The ECU 200 calculates the measured value of short-term braking effectiveness based on the difference between the actual hydraulic pressure deceleration and the estimated hydraulic pressure deceleration.

In this embodiment, the ratio between the difference between the actual hydraulic pressure deceleration and the estimated hydraulic pressure deceleration and the estimated hydraulic pressure deceleration is taken as the short-term braking effectiveness measured value, as follows.

$$\text{Short-term braking effectiveness measured value} =$$

$$(\text{actual hydraulic pressure deceleration} - \text{estimated hydraulic pressure deceleration}) \ /$$

$$\text{estimated hydraulic pressure deceleration}$$

If the calculated short-term braking effectiveness measured value exceeds a preset upper limit value or a preset lower limit value, that value may be ignored as an abnormal value and subsequent calculation may not be executed.

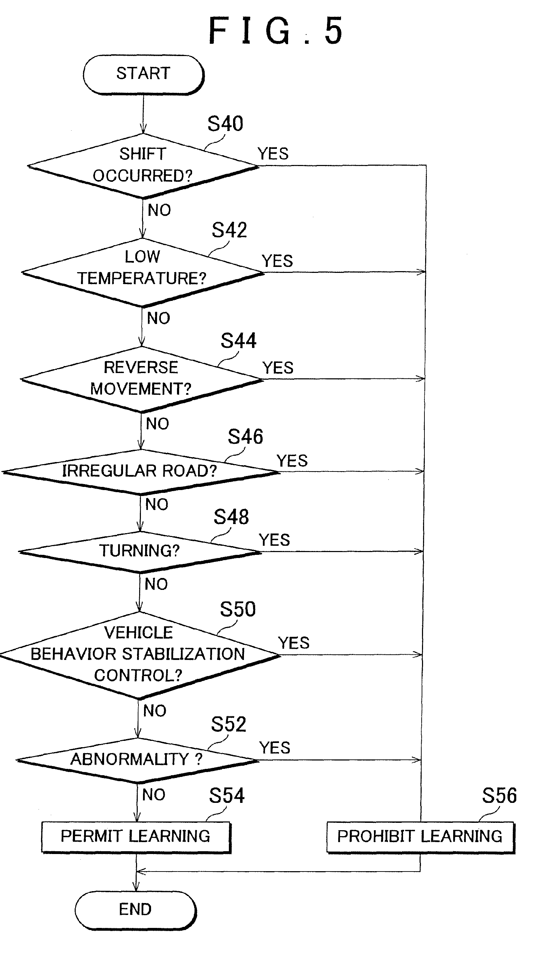

Next, the ECU 200 determines whether the learning prohibition condition is satisfied (S27). The learning prohibition condition may be, for example, a condition in which it is predicted that the accuracy of the short-term braking effectiveness measured value will be decreased (i.e., the short-term braking effectiveness measured value will be inaccurate), this condition being set beforehand in the ECU 200. The learning prohibition condition is later described in detail with reference made to FIG. 5. When the learning prohibition condition is satisfied, i.e. it is determined that the short-term braking effectiveness measured value is inaccurate (Yes at S27), the ECU 200 ends the process without using the calculated short-term braking effectiveness measured value in the calculation of the correction coefficient. That is, the braking effectiveness correction coefficient from the previous process is maintained in the ECU 200, without the short-term braking effectiveness measured value calculated at the current process being reflected (or included). In this case, until the short-term braking effectiveness measured value is again determined to be accurate, that is, until the learning prohibition condition is no longer satisfied, the braking effectiveness correction coefficient that had been held constant (unchanged) is used to correct the target deceleration. By doing this, compared with a sudden stoppage of the correction of the target deceleration with the satisfying of the learning prohibition condition, the feeling of unnaturalness imparted to the driver is reduced.

If the learning prohibition condition is not satisfied (No at S27), the ECU 200 calculates the long-term braking effectiveness measured value by an averaging process (S28). The ECU 200 calculates the long-term braking effectiveness measured value by applying appropriate averaging process to the short-term braking effectiveness measured value. In this embodiment, the ECU 200 calculates the long-term braking effectiveness measured value by, for example, the following equation.

$$X = \alpha \cdot x + (1 - \alpha) \cdot X \ (\text{previous cycle value})$$

In the above, X is the long-term braking effectiveness measured value and x is the short-term braking effectiveness measured value. The coefficient $\alpha$ is the weighting in the averaging process, this being a value from 0 to 1. That is, in this embodiment, the long-term braking effectiveness measured value X is calculated as a weighted average value of the immediately previous long-term braking effectiveness measured value X and the short-term braking effectiveness measured value x. If the value of $\alpha$ is increased, the long-term braking effectiveness measured value is calculated with emphasis given to the current short-term braking effectiveness measured value, and if the value of $\alpha$ is reduced, the long-term braking effectiveness measured value is calculated with emphasis given to the previous long-term braking effectiveness measured value. The long-term braking effectiveness measured value may also be calculated by a different averaging process, such as by taking a simple average of the short-term braking effectiveness measured values in the past several trips. Here, the "trip" means a period from the start to stop of the drive source of the vehicle. In other words, one trip corresponds to one use of the vehicle.

The ECU 200 also calculates the braking effectiveness correction coefficient for correcting the target deceleration from the long-term braking effectiveness measured value (S30). In this embodiment, the reciprocal of the value obtained by adding 1 to the long-term braking effectiveness measured value, as shown in the following equation, is used.

$$\text{Braking effectiveness correction coefficient} =$$

$$1 / (1 + \text{long-term braking effectiveness measured value})$$

When the braking effectiveness correction coefficient is calculated and thus updated, the learning process ends.

If the braking effectiveness correction coefficient calculated when the learning prohibition condition is no longer satisfied differs from the braking effectiveness correction coefficient calculated before the learning prohibition condition is satisfied and stored in the ECU 200 by more than a prescribed value, the braking effectiveness correction coefficient may be brought gradually closer to the value after the learning prohibition condition was removed. If this is done, it is possible to avoid a sudden change in the braking effectiveness correction coefficient when the learning prohibition condition is no longer satisfied, thereby stabilizing the braking effectiveness.

As described with reference to FIG. 3, the target deceleration is corrected by multiplying by the braking effectiveness correction coefficient. If the actual hydraulic pressure deceleration is small relative to the estimated hydraulic pressure deceleration, that is, if the actual braking effectiveness is insufficient relative to the estimated braking effectiveness, the target deceleration is increased to supplement the braking effectiveness. On the other hand, if the actual hydraulic pressure deceleration is large relative to the estimated hydraulic pressure deceleration, that is, if the actual braking effectiveness is excessive relative to the estimated braking effectiveness, the target deceleration is decreased to suppress braking effectiveness. In this manner, the braking effectiveness is stabilized and the feeling of unnaturalness imparted to the driver when braking is suppressed.

FIG. 5 is a flowchart showing an example of the process to determine whether the learning prohibition condition is satisfied according to the embodiment of the invention. The ECU 200 determines whether the learning prohibition condition is satisfied, i.e., whether the short-term braking effectiveness measured value is inaccurate, by the process described below, for example. When the process shown in FIG. 5 starts, the ECU 200 first determines whether the transmission has shifted gears during the measurement time for the vehicle deceleration (S40). The shift may be made automatically, or manually by the driver's operation of a shift lever.

If it is determined that a shift was made (Yes at S40), the ECU 200 prohibits learning of the braking effectiveness correction coefficient (S56). That is, the ECU 200 maintains the value of the braking effectiveness coefficient calculated in the previous learning time, rather than using the obtained short-term braking effectiveness measured value in the calculation (or update) of the braking effectiveness correction coefficient. When the transmission has shifted gears, a shift-shock occurs, with a potential temporary large variation in the deceleration of the vehicle that is unrelated to the braking force applied to the vehicle. As described with reference to FIG. 4, in this embodiment, because the actual hydraulic pressure deceleration, and thus, the short-term braking effectiveness measured value, is calculated based on the deceleration of the vehicle, it is possible that the influence of a variation in the deceleration of the vehicle due to shift shock will adversely affect the accuracy of the short-term braking effectiveness measured value. Therefore, the learning of the braking effectiveness correction coefficient is prohibited when a shift is made during the time of measuring the deceleration of the vehicle.

Because a certain amount of time is required from the start to the completion of a shift, even in the case in which a shift is made within a prescribed period of time before and after the time for measurement of the deceleration of the vehicle, it may be determined that the learning prohibition condition is satisfied. For example, it may be determined that the learning prohibition condition is satisfied if a shift is made within a period of 0.5 s before and after the measurement time. If this is done, it is possible to suppress the influence on the measured value of vehicle deceleration of a variation in the deceleration of the vehicle caused by a shift.

Rather than determining whether there is a shift within the period of time for measuring the vehicle deceleration, when, for example, the change in a value indicating a condition of the engine, such as the engine brake torque, the engine speed, the torque converter speed or the like exceeds a preset tolerance value, the ECU 200 may determine that the learning prohibition condition is satisfied (i.e., the short-term braking effectiveness measured value is inaccurate). Also, when the time rate of change in these values exceeds a preset tolerance value during the period of time of measurement of the vehicle deceleration, the ECU 200 may determine that the learning prohibition condition is satisfied. Alternatively, the ECU 200 may determine that the learning prohibition condition is satisfied when the amount of change or the time rate of change in the ratio between the engine speed and the torque converter speed exceeds a preset tolerance value. The change in the ratio between the engine speed and the torque converter speed due to vehicle speed is relatively small. Therefore, in the case of learning the braking effectiveness correction coefficient over a wide range of speed, it is preferable that the ratio between the engine speed and the torque converter speed be used to set the learning prohibition condition.

If it is determined that a shift is not made when the vehicle deceleration is measured (No at S40), the ECU 200 determines whether the ambient temperature around the vehicle is lower than a prescribed value (S42). If it is determined that the ambient temperature is lower than the prescribed value (Yes at S42), the ECU 200 prohibits learning of the braking effectiveness correction coefficient (S56). In a hydraulic braking force application mechanism as in this embodiment, if the ambient temperature is lower than the prescribed value, the viscosity of the operating fluid increases. When this happens, the greater the distance between the position of measuring the operating fluid pressure by the wheel cylinder pressure sensor 44 and the wheel cylinder 20, the greater the delay in response in the hydraulic pressure actually acting on the brake pad, thereby causing a transiently large difference between the value measured by the wheel cylinder pressure sensor 44 and the actual hydraulic pressure. Because of this difference, the accuracy of the estimated braking effectiveness, such as the estimated hydraulic pressure deceleration and the like calculated using the measured value of the wheel cylinder pressure sensor 44 decreases. Therefore, the learning of the braking effectiveness correction coefficient is prohibited when the ambient temperature is below a prescribed value.

It is desirable to set the prescribed temperature based on the relationship between the temperature and viscosity of the operating fluid, and the relationship between the viscosity of the operating fluid and the delay in response of the wheel cylinder pressure and other relationships. The ECU 200 may determine whether the ambient temperature is lower than the prescribed temperature by the value measured by the temperature sensor, such as the ambient temperature sensor, intake-air temperature sensor or the like, installed in the vehicle. The ECU 200 may also determine that the ambient temperature of the vehicle is lower than the prescribed value based on the variation in the measured value of, for example, the accumulator pressure sensor 51. This is because, if the viscosity of the operating fluid increases because of a decrease in the ambient temperature, when the wheel cylinder pressure is boosted, the operating fluid pressure in the vicinity of the accumulator 50 exhibits repeated vibrational increases and decreases.

If it is determined that the ambient temperature of the vehicle is higher than the prescribed value (No at S42), the ECU 200 determines whether the vehicle is moving in reverse when the deceleration of the vehicle (S44) is measured. If it is determined that the vehicle is moving in reverse during the vehicle deceleration measurement time (Yes at S44), the ECU 200 prohibits learning of the braking effectiveness correction coefficient (S56). Because the condition of contact of the brake pads with the brake discs when the vehicle is moving forward is different from when the vehicle is moving in reverse, the friction coefficients are different. Therefore, even if the same wheel cylinder pressure is acting, the actual hydraulic pressure deceleration for forward movement is different from the actual hydraulic pressure deceleration for reverse movement. Therefore, the learning of the braking effectiveness correction coefficient is prohibited and the previous correction coefficient is maintained if the vehicle is moving in reverse when the deceleration of the vehicle is measured.

If it is determined that the vehicle is not moving in reverse when the deceleration of the vehicle is measured (No at S44), the ECU 200 determines whether the vehicle is moving over an irregular road surface when deceleration of the vehicle is measured (S46). If it is determined that the vehicle is moving over an irregular road surface when the deceleration of the vehicle is measured (Yes at S46), the ECU 200 prohibits learning of the braking effectiveness correction coefficient, i.e., the correction coefficient is held unchanged. An irregular road surface may include, for example, an uneven road or a gravel road, or an unpaved road which, compared to the case of a vehicle moving over a good road, increases the variations in acceleration and deceleration of the vehicle. In the case of a vehicle running over such an irregular road surface, the measured value from the G sensor 60 includes more noise than normally. For this reason, the calculation accuracy of the short-term braking effectiveness measured value could decrease. Therefore, the learning of the braking effectiveness correction coefficient is prohibited if the vehicle is moving over an irregular road surface when the deceleration of the vehicle is measured.

If it is determined that the vehicle is not moving over an irregular road surface when the deceleration of the vehicle is measured (No at S46), the ECU 200 determines whether the vehicle is turning when deceleration of the vehicle is measured (S48). If it is determined that the vehicle is turning when deceleration of the vehicle is measured (Yes at S48), the ECU 200 prohibits the learning of the braking effectiveness correction coefficient (S56). When the vehicle turns, cornering drag occurs, which increases the rolling resistance acting on the wheel in comparison with straight-line movement. Because of the cornering drag, acceleration and deceleration of the vehicle may vary, and the accuracy of the short-term braking effectiveness measured value may decrease. Learning of the braking effectiveness correction coefficient is therefore prohibited if the vehicle is turning when deceleration of the vehicle is measured.

Because the effect of cornering drag is thought to be small in the case of gentle turning, the learning of the braking effectiveness correction coefficient may be continued during gentle turning. Thus, for example, the learning of the braking effectiveness correction coefficient may be prohibited when the steering angle exceeds a prescribed value and when the change or time rate of change in the steering angle exceeds a prescribed value. It is desirable that this prescribed value be established considering the relationship between the degree of turning and the size of the cornering drag, and the influence of the cornering drag on the short-term braking effectiveness measured value.

If it is determined that the vehicle does not make a turn during measurement of the deceleration of the vehicle (No at S48), the ECU 200 determines whether the vehicle behavior stabilization control is executed when the deceleration of the vehicle is measured (S50). If it is determined that the vehicle behavior stabilization control is executed during measurement of the deceleration of the vehicle (Yes at S50), the ECU 200 prohibits the learning of the braking effectiveness correction coefficient (S56).

The vehicle behavior stabilization control may include, for example, ABS (anti-lock brake system) control, VSC (vehicle stability control), and TRC (traction control) and the like, which minimize the slip of each wheel on the road surface. ABS control suppresses the locking of tires at the time of sudden braking, or when the brakes are applied on a slippery road surface. VSC suppresses slide slippage of a vehicle side skidding of wheels when the vehicle is turning. TRC suppresses spinning of the drive wheels when starting up and accelerating. When these forms of vehicle behavior stabilization control are performed, the deceleration varies differently from normal deceleration, and the accuracy of the short-time braking effectiveness measured value could decrease. The learning of the braking effectiveness correction coefficient is prohibited, therefore, when a vehicle behavior stabilization control is executed when deceleration of the vehicle is measured.

If it is determined that vehicle behavior stabilization control is not executed when deceleration of the vehicle is measured (No at S50), the ECU 200 determines whether an abnormality of the vehicle is detected when the deceleration of the vehicle is measured (S52). If it is determined that an abnormality is detected when the deceleration of the vehicle is measured, the ECU 200 prohibits the learning of the braking effectiveness correction coefficients (S56). If an abnormality is detected in this manner, the accuracy of the short-term braking effectiveness measured value may be adversely affected. The learning of the braking effectiveness correction coefficient is therefore prohibited if an abnormality is detected during measurement of the deceleration of the vehicle. The ECU 200 prohibits the learning of the braking effectiveness correction coefficient in the same manner in the case in which an abnormality is detected before the measurement of the deceleration of the vehicle.

An abnormality may be detected, for example, such as when a tire is punctured or reduced air pressure is detected, when the brake pad temperature exceeds a prescribed temperature, and when an abnormality occurs in a sensor that measures a value necessary for the calculation, such as the G sensor 60 and the wheel cylinder pressure sensor 44 or the like. For example, when the difference between the deceleration calculated from the value measured by the wheel speed sensor and the value measured by the G sensor 60 exceeds a prescribed value, because there is a possibility of an abnormality in the G sensor 60, the learning of the braking effectiveness correction coefficients is prohibited.

If no abnormality is detected, the ECU 200 permits learning of the braking effectiveness correction coefficient (S54). That is, the ECU 200 calculates the braking effectiveness correction coefficient using the obtained measured value of the short-term braking effectiveness, and uses the newly calculated braking effectiveness correction coefficient in subsequent correction.

It is not absolutely necessary that all the above-noted determination steps be adopted as learning prohibition conditions, and any one or a plurality of the above-described determination conditions may be omitted as appropriate. For example, it is possible to appropriately omit, depending upon circumstances, a determination condition that is likely to have a relatively small influence on the accuracy of the short-term braking effectiveness measured value. If this is done, it is possible to simplify the determination of the condition for prohibiting learning the braking effectiveness correction coefficient.

The learning prohibition conditions are not limited to the above-noted conditions, and other conditions may be appropriately added. For example, the ECU 200 may prohibit the learning of the braking effectiveness correction coefficient when the parking brake is operated. By doing this, it is possible to suppress the variation in the deceleration of the vehicle caused by the braking force generated by the parking brake from reflecting on the calculation of the braking effectiveness correction coefficient. Also, in a hybrid vehicle, the ECU 200 may prohibit learning of the braking effectiveness correction coefficient in the case in which regenerative braking by a motor causes a braking force. Alternatively, it is possible for the ECU 200 to prohibit the learning of the braking effectiveness correction coefficient if the rolling resistance of the wheels exceeds a prescribed value. For example, the ECU 200 may determine that the rolling resistance exceeds a prescribed value when the deceleration of the vehicle immediately before the depression operation of the brake pedal 12 exceeds a prescribed value. The ECU 200 may further prohibit learning of the braking effectiveness correction coefficient when the difference between the speeds of each wheel exceeds a prescribed value. Alternatively, if the road surface being traveled over is a hill, the ECU 200 may prohibit the learning of the braking effectiveness correction coefficient when the slope or the rate of change in the slope exceeds a prescribed value.

According to the embodiment as described above, when it is predicted that the accuracy of the calculated short-term braking effectiveness measured value decreases (i.e., when the calculated short-term braking effectiveness measured value is determined to be inaccurate), the previous braking effectiveness correction coefficient is maintained, without the short-term braking effectiveness measured value being used in calculating the braking effectiveness correction coefficient. The correction of the target deceleration by using the maintained braking effectiveness correction continues until the accuracy of the short-term braking effectiveness measured value is restored and determined as being acceptable. By doing this, it is possible to stabilize the braking effectiveness.

It is also possible to apply the present invention to the case in which feedback control is performed on the braking force based on the difference between the measured value of deceleration of the vehicle and the target deceleration. In this case, the target deceleration is used as the estimated value of the braking effectiveness and the measured value of deceleration of the vehicle is used as the actual braking effectiveness. That is, the control unit performs successive calculating and updating of a correction amount, based on the difference between the target deceleration and the measured value of deceleration of the vehicle. The control unit calculates, for example, a correction coefficient by which the target deceleration is to be multiplied, and performs successive updating thereof. When it is expected that the accuracy of the difference between the target deceleration and the measured value of deceleration of the vehicle decreases (i.e., the difference is inaccurate), the control unit limits the changing (updating) of the correction amount. Until the accuracy is restored (and is acceptable), the control unit maintains the correction amount calculated before the decrease in accuracy constant (without changing it), and continues to perform correction with the previous correction amount. In this case as well, it is possible to stabilize the braking effectiveness.

If the correction amount calculated at the time of restoring the accuracy is different from the correction amount calculated and held before the decrease in accuracy by an amount that exceeds a prescribed value, the correction amount may brought gradually closer to the correction value after the restoration of accuracy. If this is done, it is possible to avoid a sudden change in the correction amount and to stabilize the braking effectiveness.

While some embodiments of the invention have been illustrated above, it is to be understood that the invention is not limited to details of the illustrated embodiments, but may be embodied with various changes, modifications or improvements, which may occur to those skilled in the art, without departing from the spirit and scope of the invention.

**Claims**

1. A brake controller having a braking force application mechanism (21FR, 21FL, 21RR, 21RL, 80) that presses a friction member against a braked member (22) so as to apply a braking force to a wheel of a vehicle, and a control unit (200) that calculates an index indicating a difference between an estimated braking effectiveness and an actual braking effectiveness, calculates a correction amount using the index, and corrects a target value, which is set to control a pressing force of the friction member, based on the correction amount to reduce a variation in a braking effectiveness of the vehicle, the brake controller being **characterized in that**:

   the control unit (200) determines whether the index is inaccurate, and limits a change in the correction amount if it is determined that the index is inaccurate.

2. The brake controller according to claim 1, wherein the control unit (200) limits the change in the correction amount by holding the correction amount unchanged until it is determined that the index becomes accurate.

3. The brake controller according to claim 1 or 2, wherein the braking force application mechanism (21FR, 21FL, 21RR, 21RL, 80) is a hydraulic braking force application mechanism that presses the friction member against the braked member (22) by supplying an operating fluid, and
   wherein the control unit (200) extracts an actual hydraulic pressure deceleration caused by the hydraulic braking force application mechanism from a measured deceleration of the vehicle, and calculates the correction amount based on a difference between an estimated hydraulic pressure deceleration estimated by using a hydraulic pressure of the operating fluid supplied by the hydraulic braking force application mechanism and the actual hydraulic pressure deceleration.

4. The brake controller according to claim 3, wherein the control unit (200) limits the change in the correction amount when acceleration or deceleration acts on the vehicle by means of a mechanism other than the hydraulic braking force application mechanism.

**5.** The brake controller according to any one of claims 1 to 4, wherein the control unit (200) limits the change in the correction amount when the vehicle moves in reverse.

**6.** The brake controller according to any one of claims 1 to 5, wherein the control unit (200) limits the change in the correction amount when the vehicle runs on an irregular road surface.

**7.** The brake controller according to any one of claims 1 to 6, wherein the control unit (200) limits the change in the correction amount when the vehicle turns.

**8.** The brake controller according to any one of claims 1 to 7, wherein the control unit (200) limits the change in the correction amount during an execution of a vehicle behavior stabilization control of the vehicle.

**9.** The brake controller according to any one of claims 1 to 8, wherein the control unit (200) limits the change in the correction amount when an abnormality is detected.

**10.** The brake controller according to any one of claims 1 to 9, wherein the control unit (200) limits the change in the correction amount when it is determined that an accuracy of the estimated braking effectiveness decreases.

**11.** A method of control of a braking force applied to a wheel of a vehicle by pressing a friction member against a braked member (22), **characterized in that** it comprises :

calculating an index indicating a difference between an estimated braking effectiveness and an actual braking effectiveness (S26) ;
updating a correction amount based on the calculated index (S30);
determining whether the index is inaccurate (S27);
prohibiting updating the correction amount if it is determined that index is inaccurate; and
correcting a target value, which is set for the purpose of controlling the pressing force of the friction member, by using the correction amount to reduce a variation in braking effectiveness of the vehicle.

# F I G . 1

HYDRAULIC ACTUATOR

# FIG.2

WHEEL CYLINDER PRESSURE SENSOR — 44

STROKE SENSOR — 46

MASTER PRESSURE SENSOR — 48

G SENSOR — 60

ACCUMULATOR SENSOR — 51

ECU — 200

MASTER CUTOFF VALVE — 27

SIMULATOR CUTOFF VALVE — 23

PRESSURE BOOSTER VALVE — 40

PRESSURE REDUCTION VALVE — 42

EP 1 834 853 A2

# F I G . 3

START

CALCULATE TARGET
DECELERATION ⌒S10

CORRECT TARGET
DECELERATION ⌒S12

CALCULATE TARGET
HYDRAULIC PRESSURE ⌒S14

CONTROL WHEEL
CYLINDER PRESSURE ⌒S16

RETURN

# F I G . 4

START

S20

DECELERATION
MEASUREMENT CONDITION
SATISFIED?

NO

YES

MEASURE VEHICLE DECELERATION — S22

CALCULATE ESTIMATED HYDRAULIC
PRESSURE DECELERATION — S24

CALCULATE SHORT-TERM BRAKING
EFFECTIVENESS MEASURED VALUE — S26

S27

LEARNING
PROHIBITION CONDITION
SATISFIED?

YES

NO

CALCULATE LONG-TERM BRAKING
EFFECTIVENESS MEASURED VALUE
BY AVERAGING PROCESS — S28

CALCULATE BRAKING EFFECTIVENESS
CORRECTION COEFFICIENT — S30

RETURN

# F I G . 5

START

S40

SHIFT OCCURRED? — YES

NO

S42

LOW TEMPERATURE? — YES

NO

S44

REVERSE MOVEMENT? — YES

NO

S46

IRREGULAR ROAD? — YES

NO

S48

TURNING? — YES

NO

S50

VEHICLE BEHAVIOR STABILIZATION CONTROL? — YES

NO

S52

ABNORMALITY ? — YES

NO

S54 — PERMIT LEARNING

S56 — PROHIBIT LEARNING

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 62018359 A